# EUROPÄISCHE PATENTANMELDUNG

(11) **EP 4 483 761 A1**
(43) Veröffentlichungstag der Anmeldung: **01.01.2025**
(21) Anmeldenummer: 24184647.6
(22) Anmeldetag: 26.06.2024
(51) Int. Cl.: A47J 39/02

(54) **WARMHALTEBOX FÜR SPEISEN**

(30) Priorität: 27.06.2023 DE 102023116882
(71) Anmelder: OTECGO energieeffiziente Küchensysteme GmbH, 83080 Oberaudorf (DE)
(72) Erfinder: HIMPSL, Andreas, 83064 Raubling (DE)
(74) Vertreter: Kuhnen & Wacker Patent- und Rechtsanwaltsbüro PartG mbB

(57) **Zusammenfassung**

Warmhaltebox für Speisen mit einem nach oben offenen, beckenförmigen Schacht, dessen fest mit den Schachtwänden verbundener Schachtboden durch ein Heizelement beheizbar ist. Dabei ist der Schacht an einer Bedienseite mit einer Klappe versehen, durch welche, im geöffneten Zustand der Klappe, ein Speisenausgabebehälter in den Schacht derart einsetzbar ist, dass zwischen einem oberen Rand des Speisenausgabebehälters und dem oberen Rand des Schachtes zumindest ein Spalt vorhanden ist, durch welchen, wenn ein Speisenausgabebehälter in den Schacht eingesetzt ist, Luft aus dem Schacht austreten kann. Unterhalb der Klappe ist an der Bedienseite des Schachtes eine abnehmbare Montageblende vorgesehen, die die Montage und Demontage des Heizelements allein von der Bedienseite her ermöglicht. Dazu ist an der dem Schacht zugewandten Seite der Klappe ein Temperaturfühler vorgesehen, mit dem sich im Betrieb der Warmhaltebox die Temperatur der Luft im Schacht oder die des Speisenausgabebehälters messen lässt, sodass eine exakte Temperatureinstellung im Schacht mittels einer in der Klappe oder in der Montageblende angeordneten Bedieneinrichtung möglich ist.

## Beschreibung

Die Erfindung betrifft eine Warmhaltebox für Speisen mit einem nach oben offenem, beckenförmigem Schacht, dessen Schachtboden durch ein Heizelement beheizbar ist. Derartige Warmhalteboxen dienen beispielsweise zur Aufnahme eines Speisenausgabebehälters, insbesondere eines Gastronormbehälters (im Weiteren: GN-Behälter), die üblicherweise aus Edelstahl gefertigt sind.

Aus dem deutschen Gebrauchsmuster DE 299 18 672 U1 ist eine Warmhaltebox bekannt, bei der auf einem Schachtboden zum Zwecke einer Trockenbeheizung eine höhenverstellbare Heizeinrichtung angeordnet ist. In den Schachtboden integriert ist ebenfalls eine Heizeinrichtung für eine Nassbeheizung des Schachtes vorgesehen.

Aus DE 24 42 852 A1 ist ein Bauelement für eine Großküche oder ein Speisenausgabebehälter bekannt, welcher ein Gestell aufweist, in das eine Wanne integriert ist, wobei in die Wanne ein Speisenausgabebehälter, insbesondere ein Gastronormbehälter einhängbar ist. Die Wanne weist einzelne Infrarot Heizstäbe auf, welche in unmittelbarer Umgebung eines eingesetzten Gastronormbehälters angeordnet sind und zu dessen Beheizung dienen.

Aus DE 10 2018 123 803 A1 ist eine Speisenwärmeanordnung bekannt, welche einen Aufnahmeraum besitzt, in den ein Lebensmittelbehälter eingesetzt werden kann. Unterhalb eines Bodens des Aufnahmeraums ist eine Strahlungsheizeinrichtung mit zumindest einem Infrarot-Heizstab angeordnet, welcher in einem zugeordneten Reflektor angeordnet ist. Der Aufnahmeraum besitzt an einer Vorderseite eine Klappe.

Aus EP 0 635 225 A1 ist eine Warmspeisenausgabe mit einem Gehäuse bekannt, welches einen Ausschnitt zum Aufnehmen von wenigstens einem Speisenausgabebehälter für warm zu haltende Speisen besitzt. Das Gehäuse besitzt eine höhenverstellbare Heizeinrichtung zum Beheizen des Ausgabebehälters.

Aus DE 201 08 268 U1 ist eine Warmspeisenausgabe mit einem Schacht bekannt, wobei eine die Luft in dem Schacht erwärmende Heizeinrichtung vorgesehen ist. In den Schacht ist ein Speisenbehälter einsetzbar. Zwischen einem oberen Rand des Speisenbehälters und einer Kante der oberen Öffnung des Schachtes ist ein offener Spalt vorhanden, welche einen Luftaustausch zwischen dem Schacht und der Umgebung ermöglicht.

Aufgabe der Erfindung ist es, eine Warmhaltebox für Speisen anzugeben, welche gegenüber dem Stand der Technik einen weiter vereinfachten Aufbau sowie eine weiter vereinfachte Bedienbarkeit besitzt. Insbesondere soll eine Warmhaltebox bereitgestellt werden, die energieeffizient beispielsweise in Gastronorm-Behältern (GN) aufgenommene Speisen homogen erwärmt und/oder warmhält. Dabei soll die Bestückung der Warmhaltebox mit GN-Behältern einfach und komfortabel möglich sein. Dazu ist es Aufgabe der Erfindung, die Zugänglichkeit des Schachtinnenraumes einfach zu gestalten. Ferner sollen die Bauteile der Warmhaltebox, insbesondere die Heizeinrichtung, für Reinigungs-, Wartungs- und Servicearbeiten leicht zugänglich sein, wobei Verletzungsrisiken minimiert werden sollen.

Diese Aufgaben werden mit einer Warmhaltebox mit den Merkmalen des Anspruchs 1 gelöst. Vorteilhafte Ausführungsformen der erfindungsgemäßen Warmhaltebox sind in den Unteransprüchen angegeben.

Eine erfindungsgemäße Warmhaltebox für Speisen besitzt einen nach oben offenem, beckenförmigem Schacht, dessen fest mit den Schachtwänden verbundener Schachtboden von unten durch ein Heizelement beheizbar ist. Der Schacht ist an einer Bedienseite mit einer Klappe versehen, durch welche, im geöffneten Zustand der Klappe, ein Speisenausgabebehälter bevorzugt ein GN-Behälter in den Schacht derart einsetzbar ist, sodass zwischen einem oberen Rand des Speisenausgabebehälters und dem oberen Rand des Schachtes ein Spalt vorhanden ist, durch welchen, wenn ein Speisenausgabebehälter in den Schacht eingesetzt ist, Luft aus dem Schacht austreten kann. An der Bedienseite unterhalb der Klappe des Schachtes ist eine abnehmbare Montageblende vorgesehen, die die Montage und Demontage des Heizelements allein von der Bedienseite her ermöglicht. An der dem Schacht zugewandten Seite der Klappe ist ein Temperaturfühler vorgesehen, mit dem sich im Betrieb der Warmhaltebox die Temperatur der Luft im Schacht oder die des Speisenausgabebehälters bzw. des GN-Behälters messen lässt, sodass eine exakte Temperatureinstellung im Schacht und/oder im Speisenausgabebehälter mittels einer in der Klappe oder in der Blende angeordneten Temperatureinstellvorrichtung möglich ist.

Durch die oben erläuterte Ausgestaltung der Bedienseite (Frontseite) der Warmhaltebox mittels einer Klappe und einem darin aufgenommenen Temperaturfühler gelingt es insbesondere, Speisenausgabebehälter, insbesondere Gastronormbehälter, mit zu wärmenden Speisen komfortabel einzusetzen, da diese einfach "eingeschoben" werden können. Auch dessen Entnahme ist komfortabel durch einfaches Herausziehen möglich, wobei ein Überschwappen der Speisen durch ein sicheres Festhalten durch das Kochpersonal weitestgehend vermieden werden kann. Ein oftmals umständliches "heraushebeln" oder auf den letzten Zentimeter "Hineinfallenlassen" in die Behälteraufnahme kann so vermieden. Durch das Vorsehen einer Klappe kann der Speisenbehälter mit sicherem Griff in die erfindungsgemäße Warmhaltebox eingesetzt und wieder entnommen werden. In einer bevorzugten Ausführungsform kann der mit heißen Speisen befüllte Speisenbehälter mit einer Art Servierwagen an die Warmhaltebox herangefahren werden und einfach bei geöffneter Klappe in den Schacht der Warmhaltebox eingeschoben werden. Leere oder teilentleerte Speisenbehälter können in umgekehrter Reihenfolgen auch wieder herausgenommen werden. In beiden Fällen kann so ein geführtes Einsetzen oder Herausnehmen eines Speisenbehälters in oder aus einer erfindungsgemäßen Warmhaltebox ermöglicht werden. Ein freihändiges Hantieren der oft doch nicht ganz leichten Speisebehälter - speziell, wenn die mit flüssigen Speisen gefüllt sind - kann so vermieden werden.

Durch den in der Klappe angeordneten Temperaturfühler lässt sich die Temperatur in der Speise einfacher und zielführender bestimmen, da der Temperaturfühler beispielsweise kontaktlos die Behältertemperatur im oberen Bereich des Schachtes / der Speise bestimmt, also an einer Stelle, die bei der Speiseentnahme und den sich daran anschließenden Verzehr von besonderer Wichtigkeit ist. Die im Stand der Technik oftmals übliche Temperaturmessung am Behälterboden führt häufig zu kalten Speisen an der Oberseite. Damit die Speisen unten nicht ankleben/anbrennen muss die Bodentemperatur entsprechend niedrig eingestellt werden und reicht daher oftmals nicht aus, die oberen Schichten der Speisen ausreichend zu erwärmen/warmzuhalten. Eine Temperaturanhebung führt dann ggfs. zu einem Anlegen/Anbrennen der Speisen am Behälterboden.

Weiterhin sind durch die erfindungsgemäß in der frontseitigen Klappe eingebrachte Sensorik und Bedienelemente die Betriebsparameter der Warmhaltebox in vorteilhafter Art und Weise überwach- und einstellbar. Hierdurch gelingt es somit auch, die Warmhaltebox z.B. in ein umgebendes Möbelstück oder in eine umgebende Präsentiertheke fest einbauen zu können und trotzdem die volle Bedienbarkeit, die leichte Reinigungsmöglichkeit und die Variabilität hinsichtlich der Bestückung der Warmhaltebox mit unterschiedlichen Heizeinrichtungen und/oder unterschiedlichen Speisenausgabebehälter (Gastronormbehälter) zu gewährleisten.

Eine demontierbare Blende an der Front-Bedienseite der erfindungsgemäßen Warmhaltebox ermöglicht eine einfache Montage/Demontage des Heizelements. Somit kann das Heizelement der Warmhaltebox von der Bedienseite her unter den Schachtboden geschoben werden, wobei seitliche Führungen für das Heizelement ausgestaltet sind, um das Heizelement in Richtung der der Bedienseite abgewandten Seite zu so führen, dass das Heizelement an der der Bedienseite gegenüberliegenden Seite an der Unterseite des Schachtbodens anliegt und nur mit Befestigungsmitteln an der Bedienseite gehalten wird. Hierdurch gelingt in einfacher Art und Weise eine schubladenartige Einsatz- und Austauschmöglichkeit verschiedener Heizelemente. Im Servicefall kann hier schnell, ggfs. ohne Entnahme des Speisenbehälters ein Austausch eines defekten Heizelementes binnen weniger Minuten vollzogen werden. Für diese und andere Fälle ist mit der Anordnung einer demontierbaren Blende unterhalb der Behälterklappe eine einfache Befestigungsmöglichkeit für das Heizelement geschaffen, welche außerdem gut zugänglich ist. Gleichzeitig ist eine vollumfängliche Wartungs- und Reparaturmöglichkeit gegeben, da alle Bauteile der erfindungsgemäßen Warmhaltebox von der Bedienseite her zugänglich sind. Eine Aufwendige Demontage der Warmhaltebox aus der Präsentiertheke kann daher ebenso entfallen, wie die Demontage der Theke selbst. Da auch eine Zugänglichkeit zur Warmhaltebox von hinten oder seitlich entfällt, können Theken, in denen die erfindungsgemäße Warmhaltebox installiert werden soll, platzsparender, insbesondere in Tiefenrichtung, geplant werden. Somit ist auch die Reinigungsmöglichkeit solcher Theken verbessert.

Erfindungsgemäß weist der obere Rand der Schachtwände der Warmhaltebox Luftspalt-bildende Abstandshalter auf, die beispielsweise Zinnen- oder Lochblech-artig ausgebildet sind bzw. seitliche Öffnungen oder zumindest Mittel aufweisen, die einen senkrechten Abstand bereitstellen können. Diese Abstandshalter oder abstandshaltenden Mittel stützen einen Speisenausgabebehälter derart ab, dass ein oder mehrere Luftspalte oberhalb der Schachtwände verbleiben, wenn ein Speisenausgabebehälter in den Schacht eingesetzt ist. In einer bevorzugten Ausführungsform sind diese Luftspalt-bildenden Mittel am oberen Schachtrand abnehmbar befestigt bspw. einsteckbar, so dass diese einfach und separat gereinigt werden können. In einer weiteren Ausführungsform sind die ein- oder aufsteckbaren Abstandshalter mehrteilig ausgeführt, sodass die einzelnen Teile im Wesentlichen flach ausgebildet sind und somit einfacher handhabbar sind, insbesondere bei deren Reinigung, da diese so einfach in eine Geschirrspülmaschine einlegbar sind.

Bevorzugt sind diese Abstandshalter so ausgebildet, dass diese die Schachtwände im Wesentlichen senkrecht nach oben verlängern, sodass ein Speisenaufnahmebehälter mit seinem oberen, Kragen-artigen Rand darauf zu liegen kommt. Durch in die Abstandshalter eingebrachte Öffnungen kann das im Schachtinneren verbleibende Luftvolumen mit der Umgebung kommunizieren, d.h. im Betrieb der Warmhaltebox bildet sich eine Konvektion zwischen dem warmen Schachtvolumen und der Umgebung außerhalb der Warmhaltebox aus. Durch diese Luft-Konvektion kann oftmals auf sogenannte "Baine Marie"-Warmhalteboxen (Wasserbad-Warmhalteboxen) verzichtet werden, da eine Temperaturverteilung innerhalb des Schachtes auf Grund der Luft-Konvektion erfindungsgemäß nicht nur feinfühlig einstellbar ist sondern auch hohe Temperaturunterschiede zwischen Schachtboden, Schachtwänden, Behälterboden und Behälterwänden vermieden werden können, wie es üblicherweise nur bei Einsatz von Wasserbad-Warmhalteboxen erreicht werden kann. Die Nachteile solcher mit großen Wassermengen befüllten Wasserbad-Warmhalteboxen liegen nicht nur für den einschlägigen Fachmann auf der Hand. Damit einhergehend ist auch leicht ersichtlich, dass mit der erfindungsgemäßen Warmhaltebox ein geringerer Energiebedarf benötigt wird, da nicht Wasser mit einer hohen spezifischen Wärmekapazität erhitzt und warmgehalten werden muss, oder hohe Behälterbodentemperaturen erreicht werden müssen, um die in der erfindungsgemäßen Warmhaltebox aufgenommenen Speisen warmzuhalten. Ferner entfällt das Risiko eines Trockenbetriebes von Wasserbadwarmhaltetheken, was oft bei einem längeren Betrieb von Wärmetheken auftritt, wenn das Bedienpersonal vergisst, Wasser nachzufüllen.

Theoretisch können die Abstandshalter zwischen der Schachtoberkante und dem Speisebehälter auch horizontal angeordnet werden, was jedoch den Bauraum der Warmhaltebox zumindest jedoch den Bauraum des Schachtes vergrößert, da der Kragen eines Speiseausgabebehälters die Öffnungen in des Abstandshaltern nicht überdecken sollte damit sich im Betrieb der Warmhaltebox eine Konvektion ausbilden kann.

Weiterhin kann es vorteilhaft sein, in der Klappe, unterhalb der Klappe und/oder in den Schachtwänden oberhalb des Bodens zusätzliche Lufteintrittsöffnung vorzusehen, damit die Ausbildung einer Konvektionsströmung begünstigt wird. Gegebenenfalls reicht hier bereits der Freiraum /-gang für die Klappenbewegung aus, damit über die an der Oberseite des Schachtes zwischen dem eingesetzten Speisenbehälter und der Schachtwandung vorgesehenen Öffnungen, bspw. Spalte, Luft den Speisenbehälter im Betrieb der Warmhaltebox umströmen kann.

Mit dieser so ermöglichten, freien Konvektion im Schachtinneren können Speisen homogener erwärmt/warmgehalten werden, da keine Stauwärme entsteht, die ein bereichsweises Anhaften oder gar Anbrennen der Speisen zur Folge haben könnte. Eine so ermöglichte Luftzirkulation erlaubt die gleichmäßige Erwärmung und Warmhaltung von Speisen in dem Speisenbehälter/ GN-Behälter, durch eine gute Konvektion der den Behälter umgebenden Luft als Wärmetransportmedium. Insbesondere im Zusammenspiel mit dem oberen Spalt kann mit einer unteren Öffnung sichergestellt werden, dass sich eine Konvektion im Schacht bei eingesetzten Speisenbehälter ausbilden kann. Auch die Anbringung eines Zusatzlüfters liegt dabei im Bereich der Erfindung, um zusätzlich zu einer freien Konvektion eine erzwungene Konvektion überlagern zu können, falls erforderlich. Hierbei dürfte die Größe eines Computerlüfters ausreichend sein, damit der Wärmetransport an den Speisenbehälter verbessert wird, jedoch nicht das Temperaturniveau im Schacht insgesamt verringert wird.

Die Ausbildung von oberseitigen Öffnungen bzw. Spalten kann beispielsweise durch die Anordnung von Zinnen und/oder Löchern, insbesondere Langlöcher, horizontalen Schlitzen o.Ä. oberhalb des oberen Schachtrandes erfolgen. Bevorzugt in Art eines ein- oder aufsetzbaren Rahmens an der oberen Schachtöffnung. Ein solcher Rahmen ist vorzugsweise demontierbar befestigt und als ein- oder mehrteiliger Rahmen ausgebildet. Zur Vermeidung von Verletzungen und zur besseren Reinigungsmöglichkeit des Rahmens selbst und des Schachtinneren ist der Rahmen bevorzugt werkzeugfrei abnehmbar. Bevorzugt ist der obere Rand mit den Luftspalt bildenden Mitteln daher händisch abnehmbar ausgebildet. Eine mehrteilige Ausführung erhöht dessen Hantierbarkeit und ermöglicht dessen einfachere Reinigung, beispielsweise in einer Geschirrspülmaschine. Dies dient zur erleichterten Reinigung sowohl des Speisenausgabebehälters, wie auch der Bauteile der Warmhaltebox selbst, insbesondere des Schachtinneren.

Zweckmäßigerweise ist bei der Warmhaltebox die Schachthöhe so bemessen, dass zwischen dem Boden eines eingesetzten Speisenausgabebehälters und dem Schachtboden ein Abstand verbleibt. Hierdurch wird zusätzlich ein unbeabsichtigtes Anbrennen/Verbrennen/Überhitzen von Speisen im Gastronormbehälter vermieden und es kann sich eine den Speisenbehälter umgebende Luftzirkulation ausbilden, was ebenfalls der Förderung der Konvektion der Warmluft im Inneren des Schachtes und in der Umgebung des Speisenausgabebehälters dient.

Das Heizelement ist bevorzugt eine Widerstandsheizung und kann als eine Einheit in Art einer Heizpatrone durch die erfindungsgemäß unterhalb der Servierklappe angeordnete Montageblende unterhalb eines Schachtbodens des Schachtes in einen Einschubschacht eingeschoben werden. Erfindungsgemäß wird der Schachtboden bevorzugt durch eine Glaskeramikplatte ausgebildet. Eine zur Warmhaltebox gehörende und bspw. mit dem Schacht fest verbundene Glaskeramikplatte, die den Schachtboden bildet, ermöglicht es in einfacher Art und Weise, leicht wechselbare Heizelemente unterhalb der Glaskeramikplatte in einen Einschubschacht in die erfindungsgemäße Warmhaltebox einzubringen bzw. herauszunehmen. Der Innenraum der Warmhaltebox bleibt unabhängig von der gerade eingesetzten Heizeinrichtung unverändert, womit auch eine Induktionsheizeinrichtung oder ein Strahlungsheizelement oder ein Gas- oder Flüssig Brennstoffelement zum Einsatz kommen kann, falls dies gewünscht wird. Bei Induktionsheizeinrichtungen ist jedoch darauf zu achten, dass der Schachtboden oder der Boden des Speisenbehälters mit der Induktionsheizeinrichtung in Kontakt kommt, damit der Wärmeeintrag in den Schacht bzw. Speisenbehälter möglich ist.

Elektronisch/elektrisch betreibbare Heizelemente haben den Vorteil, dass sie in ihrer Heizleistung relativ einfach einstell- bzw. regelbar und allesamt sauber und abgasfrei sind. Sie sind daher gas- und flüssigkeitsverbrennenden Wärmequellen vorzuziehen, welche außerdem schlechter in ihrer Heizleistung einstellbar sind. Bevorzugt wird erfindungsgemäß daher eine Widerstandsheizung eingesetzt, da eine solche lediglich durch ihre Stromaufnahme sehr feinfühlig gesteuert werden kann.

Zum Zwecke der energiesparenden Ausgestaltung der Warmhaltebox ist es bevorzugt, sowohl die Schachtwände als auch die Klappe zumindest oberhalb des Schachtbodens wärmeisoliert gegenüber der Umgebung und/oder Wärmetheke auszubilden.

Bei Ausbildung mehrerer Schachtvolumina in einer Warmhaltebox kann es vorgesehen sein, dass durch senkrecht einsetzbare Trennwände das Schachtvolumen unterteilt werden kann und der Schachtboden durch mehrere separat einstellbare Heizelemente beheizt werden kann, sodass bspw. jedes Teilvolumen separat temperiert werden kann.

Bei einer besonders bedienfreundlich ausgestalteten Ausführungsform der Warmhaltebox ist die Temperatur im Schacht mittels einer Temperatureinstellvorrichtung in der Klappe oder in der Montageblende einstellbar. Dies kann beispielsweise mittels eines Drehreglers oder Druckknöpfen oder auch mittels eines Touchpads zum Anheben oder Absenken der Temperatur im Schacht erfolgen.

Insbesondere zur Verwirklichung einer Kommunikationsmöglichkeit mit drahtlosen oder drahtgebundenen Datenverarbeitungsgeräten kann die Warmhaltebox mit einer Kommunikationsschnittstelle ausgestattet sein, die eine Fernkommunikation, z.B. mit dem Internet, bereitstellt. Über die Kommunikationsschnittstelle können zweckmäßigerweise Steuersignale zum Einstellen der Temperatureinstellvorrichtung übertragen werden.

Im Folgenden wird die Erfindung anhand der beigefügten Zeichnungen beispielhaft näher erläutert. Es zeigen:
- Figur 1:: eine perspektivische Ansicht einer erfindungsgemäßen Warmhaltebox;
- Figur 2a:: eine Frontansicht auf die Bedienseite der erfindungsgemäßen Warmhaltebox ohne eingesetzten Speisenausgabebehälter/Gastronombehälter;
- Figur 2b:: einen Längsschnitt durch eine erfindungsgemäße Warmhaltebox entlang der Linie A-A aus Figur 2a;
- Figur 3a:: eine Frontansicht auf die Bedienseite der erfindungsgemäßen Warmhaltebox mit eingesetztem Speisenausgabebehälter / Gastronombehälter;
- Figur 3b:: einen Längsschnitt durch eine erfindungsgemäße Warmhaltebox entlang der Linie A-A aus Figur 3a;
- Figur 4:: einen Längsschnitt durch eine erfindungsgemäße Warmhaltebox entlang der Linie A-A aus Figur 3a mit einer geöffneten Klappe.

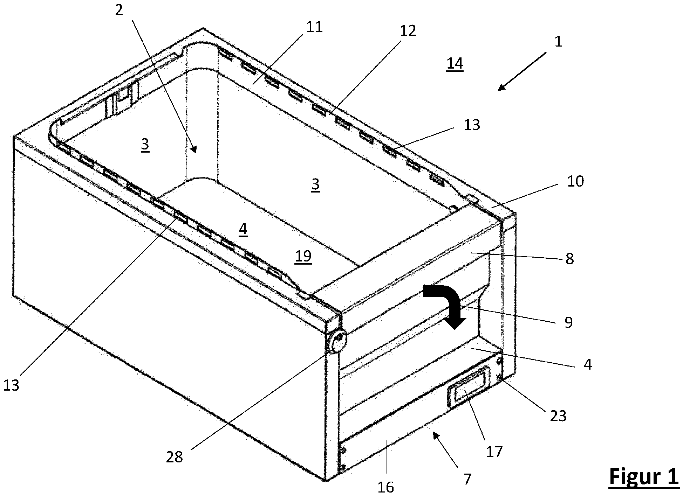

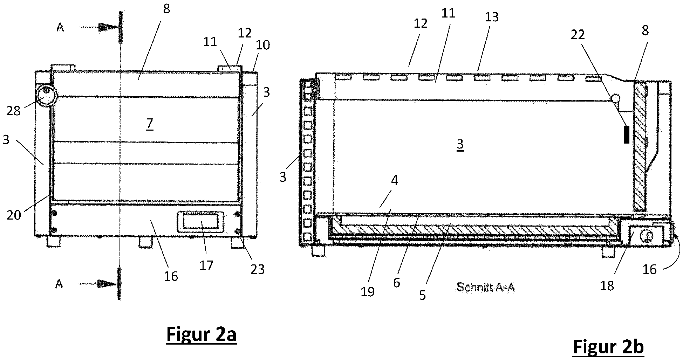

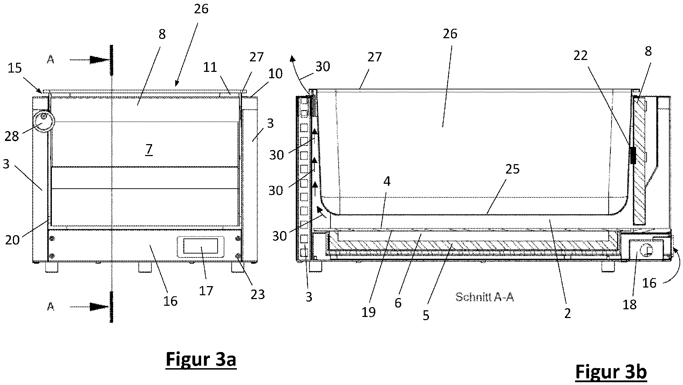

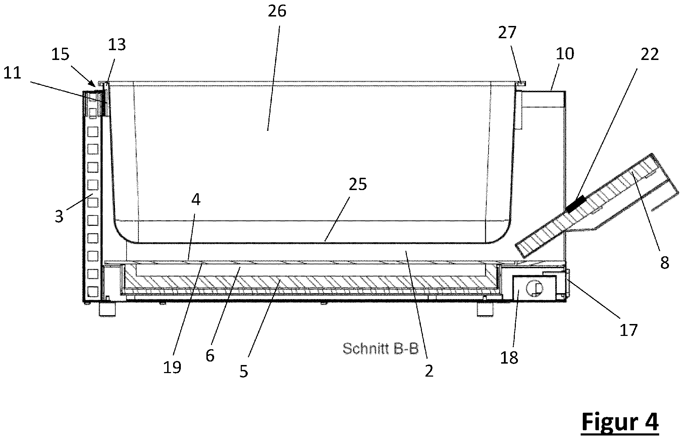

Figur 1 zeigt eine perspektivische Ansicht einer erfindungsgemäßen Warmhaltebox 1, in die kein Speisenausgabebehälter 26 eingesetzt ist. Die erfindungsgemäße Warmhaltebox 1 (vergleiche auch Figuren 1 bis 4) besitzt einen in einer Vertikalrichtung oben offenen Schacht 2, welcher von Schachtwänden 3 begrenzt ist. Vertikal unten ist der Schacht 2 durch einen Schachtboden 4 begrenzt, welcher erfindungsgemäß bevorzugt durch eine Glaskeramikplatte 19 gebildet wird. Unterhalb des Schachtbodens 4 ist ein Heizelement 5 (vergleiche Figuren 2b, 3b und 4) in einen Einschubschacht 6 eingesetzt. Eine Bedienseite 7, die im Betrieb der Warmhaltebox 1 auf einen Bediener/ eine Servicekraft der Warmhaltebox 1 zuweist, ist oberhalb des Schachtbodens 4 mittels einer Klappe 8 verschlossen. Die Klappe 8 kann in der dargestellten Pfeilrichtung 9 geöffnet werden und entgegen der Pfeilrichtung 9 wieder verschlossen werden. Dies kann bspw. federbelastet mit Arretierstellungen erfolgen, wie dies bspw. von Backöfen her bekannt ist. Figuren 2b & 3b zeigen die erfindungsgemäße Warmhaltebox 1 im Längsschnitt mit geschlossener Klappe 8. Figur 4 zeigt die Warmhaltebox 1 im Längsschnitt mit zumindest teilweise geöffneter Klappe 8.

Die jeweils vertikal oberen Enden der Schachtwände 3 und der Klappe 8 bilden einen oberen Rand 10 des Schachtes 2. Im Bereich des oberen Randes 10 des Schachtes 2 sind Abstandshalter 11 angeordnet, welche mit einer freien Kante 12 den oberen Rand 10 des Schachtes 2 vertikal ein Stück nach oben überragen und den oberen Rand der erfindungsgemäßen Warmhaltebox 1 bilden, auf den ein Kragen eines Speisenausgabebehälters 26 aufgesetzt werden kann (siehe Figuren 3a, 3b & 4).

In den den Rand 10 überragenden Teilbereichen des Abstandshalters 11 sind eine Vielzahl von Öffnungen 13 eingebracht, die dazu dienen, den Innenraum des Schachtes 2 bei eingesetztem Speisenausgabebehälter 26 (siehe Figuren 3a, 3b & 4) mit der Außenumgebung 14 der Warmhaltebox 1 zu verbinden, sodass warme Luft aus dem Inneren des Schachtes 2 durch die Öffnungen 13 nach außen gelangen kann. So kann sich im Betrieb der erfindungsgemäßen Warmhaltebox eine freie Konvektion zwischen dem verbleibenden Luftvolumen zwischen den Schachtwänden und den Wänden des Speisenausgabebehälters 26 und der Umgebung 14 außerhalb der Warmhaltebox ausbilden. Dies ist mit den Pfeilen 30 in Figur 3b angedeutet.

Im Betrieb der Warmhaltebox 1 liegt auf den freien Kanten 12 der Abstandshalter 11 ein Kragen 27 eines Speisenausgabebehälter 26 auf, der beispielsweise als Gastronormbehälter ausgebildet ist. Der obere Rand/Kragen 27 des Speisenausgabebehälter 26 bildet dann durch die überhöhte Anordnung der freien Kante 12 des Abstandshalters 11 zusammen mit den Öffnungen 13 im Abstandshalter 11 einen oder mehrere Spalte 15 zum Luftaustausch zwischen dem Inneren des Schachtes 2 und der Außenumgebung 14 der Warmhaltebox 1.

Unterhalb der Klappe 8 ist ein Einschubschacht 6 für ein Heizelement 5 (siehe Figuren 3a & 3b) mittels einer Montageblende 16 verschlossen. Die Montageblende 16 zeigt auf den Bediener zuweisend eine Bedieneinrichtung 17, welche neben Bedienelementen auch Anzeigeelemente, wie zum Beispiel einen Bildschirm und oder ein Display aufweisen kann. Auch kann die Bedieneinrichtung 17 gegebenenfalls Anschlussmittel zum elektrischen Anschließen der Warmhaltebox 1 an eine Stromversorgung aufweisen.

Weiterhin kann die Bedieneinrichtung 17 eine Kommunikationsschnittstelle bereitstellen, mittels der - kabelgebunden oder kabellos - ein Datenaustausch zwischen der Warmhaltebox 1, insbesondere deren elektrischer Steuervorrichtung 18 und einem externen Datenempfänger (nicht gezeigt) ermöglicht wird.

An der Bedienseite 7 ist weiterhin beispielsweise eine Klappensicherungseinrichtung 28, insbesondere ein Drehriegel angeordnet, mit dem ein unbeabsichtigtes Öffnen der Klappe 8 verhindert werden kann.

Der Schachtboden 4 ist beispielsweise als Glaskeramikplatte 19 ausgebildet, welche auf dem Heizelement 5 angeordnet ist oder welcher fest innerhalb des Schachtes 2 mit den Schachtwänden 3 verbunden ist. In letzterer Ausführungsform kann das Heizelement 5 beispielsweise als Baugruppe aus dem Einschubschacht 6 entnommen werden, und die Glaskeramikplatte 19, die den Schachtboden 4 bildet, verbleibt als Schachtboden 4 innerhalb des Schachtes 2 der Warmhaltebox 1.

Die Klappe 8 besitzt beispielsweise Lagerzapfen 20, mittels denen die Klappe 8 in benachbart angrenzenden Schachtwänden 3 schwenkbar gelagert ist. Auf einer dem Schacht 2 zugewandten Seite 21 der Klappe 8 ist ein Temperaturfühler 22 zur Messung der Temperatur innerhalb des Schachtes 2 vorgesehen (siehe auch Figuren 3a, 3b & 4). Abweichend zu dem in den Figuren 1 und 2 gezeigten Ausführungsbeispiel können die Bedieneinrichtung 17 sowie die Klappensicherungseinrichtung 28 auch an der Klappe 8 oder in die Klappe 8 integriert angebracht sein, wodurch die Montageblende 16 durchbruchfrei ausgestaltet sein kann. In einer weiteren Konsequenz kann auch die Steuervorrichtung 18 in der Klappe 8 untergebracht werden, wodurch eine Montage und Demontage des Heizelementes 5 noch weiter vereinfacht wird. Zudem ist eine in der Klappe 8 angeordnete Steuervorrichtung 18 weniger temperaturbelastet und kann daher gegebenenfalls ohne erhöhte Temperaturschutz- oder -abschirmmaßnahmen ausgeführt werden.

Die Montageblende 16 ist bevorzugt mittels Befestigungsmitteln 23 befestigt und verschließt zur Bedienseite 7 hin den Einschubschacht 6. Der Einschubschacht 6 wird vertikal nach unten durch einen Boden 24 begrenzt. Der Einschubschacht 6 ist somit in vertikaler Richtung durch die Glaskeramikplatte 19 bzw. den Schachtboden 4 nach oben und durch den Boden 24 nach unten begrenzt. Das Heizelement 5 wirkt somit im eingesetzten Zustand auf eine Unterseite des Schachtbodens 4 ein. Die hierauf einwirkende Wärme wird durch den Schachtboden 4, bevorzugt eine Glaskeramikplatte 19, in den Innenraum des Schachtes 2 geleitet oder falls der Schachtboden 4 geeignet wärmestrahlungsdurchlässig ausgebildet ist, kann eine Wärmeübertragung vom Heizelement 5 in den Innenraum des Schachtes 2 durch den Schachtboden 4 hindurch auch über Strahlung, beispielsweise Infrarotstrahlung erfolgen. Das Heizelement 5 ist bevorzugt als Widerstandsheizelement ausgebildet, kann aber auch ein Induktionsheizelement, ein Strahlungsheizelement oder ein Brennstoffelement sein.

Mit der erfindungsgemäßen Warmhaltebox 1 gelingt es in besonders einfacher und bedienungsfreundlicher Art und Weise, eine Kombination vorteilhafter Bedienanordnungen bereitzustellen und trotzdem eine leichte Auswechselbarkeit des Speisenausgabebehälters 26 sowie des Heizelements 5 als auch eine vereinfachte Zugänglichkeit zum Schachtinnenraum des Schachtes 2 zum Einsetzen und Entfernen von Speisenausgabebehältern 26, zum Beispiel Gastronormbehältern, sowie zum Reinigen der Schachtwände 3 bereitzustellen. Dies geht insbesondere aus den Figuren 3a & 4 hervor, die eine erfindungsgemäßen Warmhaltebox 1 mit einem eingesetzten Speisenausgabebehälter 26 im Längsschnitt zeigen. Hier ist erkennbar, dass das Heizelement 5 selbst bei eingesetztem Speisenausgabebehälter 26 auswechselbar ist. Es muss lediglich die Montageblende 16 entfernt und die Steuervorrichtung 18 aus dem Einschubschacht 6 entnommen werden, um das Heizelement 5 entfernen und (wieder) einsetzen zu können. Dabei weist der Einschubschacht bevorzugt Führungsschienen auf denen das Heizelement 5 während des Austausches geführt entlanggleiten kann. Somit kann bei einem Ausfall des Heizelementes, dieses getauscht werden ohne die gesamte Warmhaltebox 1, wie im Stand der Technik üblich, demontieren zu müssen, oder gar die Warmhaltebox 1 aus einer Theke ausbauen zu müssen.

Wie insbesondere mit Figur 4 gezeigt ist, kann ein Speisenausgabebehälter 26 einfach durch Öffnen der Klappe 8 eingesetzt bzw. auf den oberen Rand 10 der Abstandshalter 11 aufgeschoben werden. Wie bekannt, weisen solche Speisenausgabebehälter 26 einen oberen Rand 27 auf, der kragenförmig vorsteht und den Speisenausgabebehälter 26 hängend im Schacht 2 der Warmhaltebox 1 hält. Somit entfällt hier ein im Stand der Technik übliches vertikales Einbringen des Speisenausgabebehälter 26, was, wie unschwer vorstellbar ist, etwas knifflig ist, wenn alle 4 Seiten des Schachtes senkrecht stehen, da dann meist das letzte Wegstück beim Einsetzten des Speisenausgabebehälters 26 im freien Fall erfolgt. Dies erfordert speziell bei gefüllten Speisenausgabehältern 26, wie bspw. Gastronormbehältern, nicht nur Geschick, sondern auch einen gewissen Kraftaufwand, da solche mit Speisen gefüllten Gastronormbehälter schnell mal 10kg oder mehr wiegen können und zudem heiß sind, wodurch hier mit angelegter Wärmeschutzausrüstung hantiert werden muss, was das vertikale Einsetzen oder Herausholen der Speiseausgabebehälter zusätzlich erschwert.

Erfindungsgemäß lässt sich mit dem wartungsfreundlich in der Klappe 8 angeordneten Temperaturfühler 22 (siehe Figuren 2b, 3b & 4) die Temperatur im Schacht gut überprüfen und einstellen, wobei insbesondere die in den Abstandshaltern 11 eingebrachten Öffnungen 13 durch die Ermöglichung einer freien Konvektion für eine homogenere Temperaturverteilung im Schachtinnenraum sorgen. So kann über die Bedieneinrichtung 17 die Steuervorrichtung 18 feinfühlig eingestellt und an das gewünschte Temperaturniveau angepasst werden. Rein exemplarisch ist der Temperaturfühler 22 in den dargestellten Ausführungsformen rein zur Veranschaulichung und besseren Erkennbarkeit im mittleren Bereich der Klappe 8 angeordnet. Ein Fachmann erkennt jedoch sofort, dass ein solcher Temperaturfühler 22 oder mehrere solcher Temperaturfühler auch im oberen und/oder unteren Bereich der Klappe 8 angeordnet werden können. Auch eine bündige Integration in der Klappe 8, also weniger vorspringend, ist vom Erfindungsgedanken umfasst.

Abschließend lässt sich sagen, dass mit der erfindungsgemäßen Warmhaltebox 1 eine gegenüber dem Stand verbesserte Warmhaltebox bereitgestellt wird, deren Bedienung, Reinigung und Wartung stark erleichtert ist und die gleichzeitig eine homogenere Temperaturverteilung um einen eingesetzten Speisenausgabebehälter 26 zulässt.

Weitere Abänderungen und Verbesserungen der gezeigten Ausführungsbeispiele, die im Können des Fachmannes liegen und hier nicht angesprochen wurden, sollen dabei ebenfalls vom Erfindungsgedanken umfasst sein.

### Bezugszeichenliste

| | | | |
|---|---|---|---|
| 1 | Warmhaltebox | 17 | Bedieneinrichtung |
| 2 | Schacht | 18 | elektrische Steuervorrichtung |
| 3 | Schachtwand | 19 | Glaskeramikplatte |
| 4 | Schachtboden | 20 | Lagerzapfen |
| 5 | Heizelement | 21 | Schacht zugewandte Seite der Klappe |
| 6 | Einschubschacht | | |
| 7 | Bedienseite/Vorderseite | 22 | Temperaturfühler |
| 8 | Klappe | 23 | Befestigungsmittel |
| 9 | Pfeilrichtung | 24 | Boden Warmhaltebox |
| 10 | oberer Rand des Schachtes | 25 | Boden Speisenausgabebehälter |
| 11 | Abstandshalter | 26 | Speisenausgabebehälter |
| 12 | obere Kante Abstandshalter | 27 | oberer Rand / Kragen des Speisenausgabebehälters |
| 13 | Öffnungen in Abstandshalter | | |
| 14 | Außenumgebung | 28 | Klappensicherungseinrichtung |
| 15 | Spalt / Luftspalt | | |
| 16 | Montageblende | | |

## Patentansprüche

1. Warmhaltebox (1) für Speisen mit einem nach oben offenen, beckenförmigen Schacht (2), dessen fest mit den Schachtwänden (3) verbundener Schachtboden (4) durch ein Heizelement (5) beheizbar ist, wobei der Schacht (2) an einer Bedienseite (7) mit einer Klappe (8) versehen ist, durch welche, im geöffneten Zustand der Klappe (8), ein Speisenausgabebehälter (26) in den Schacht (2) derart einsetzbar ist, dass zwischen einem Kragen (27) des Speisenausgabebehälters (26) und dem oberen Rand (10) des Schachtes (2) ein Spalt (15) vorhanden ist, durch welchen, wenn ein Speisenausgabebehälter (26) in den Schacht (2) eingesetzt ist, Luft aus dem Schacht (2) austreten kann, und wobei unterhalb der Klappe (8) an der Bedienseite (7) eine abnehmbare Montageblende (16) vorgesehen ist, die die Montage und Demontage des Heizelements (5) allein von der Bedienseite (7) her ermöglicht, und wobei an der dem Schacht (2) zugewandten Seite der Klappe (8) ein Temperaturfühler (22) vorgesehen ist, mit dem sich im Betrieb der Warmhaltebox (1) die Temperatur der Luft im Schacht (2) oder die des Speisenausgabebehälters (26) messen lässt, sodass eine exakte Temperatureinstellung im Schacht (2) mittels einer in der Klappe (8) oder in der Montageblende (16) angeordneten Bedieneinrichtung (17) möglich ist.

2. Warmhaltebox (1) nach Anspruch 1, bei der das Heizelement (5) von der Bedienseite (7) her unter den Schachtboden (4) geschoben werden kann, wobei seitliche Führungen für das Heizelement (5) ausgestaltet sind, um das Heizelement (5) in Richtung der der Bedienseite (7) abgewandten Rückseite so zu führen, dass das Heizelement (5) an der Rückseite und an der Unterseite des Schachtbodens (4) anliegt und nur an der Bedienseite (7) mit Befestigungsmitteln (23) gehalten wird.

3. Warmhaltebox (1) nach Anspruch 1 oder 2, bei der in der Klappe (8) und/oder in den Schachtwänden (3) oberhalb des Schachtbodens (4) zumindest eine Lufteintrittsöffnung vorgesehen ist.

4. Warmhaltebox (1) nach einem der Ansprüche 1 bis 3, bei der die Schachthöhe so bemessen ist, dass zwischen dem Schachtboden (4) eines eingesetzten Speisenausgabebehälters (26) und dem Schachtboden (4) ein Abstand verbleibt.

5. Warmhaltebox (1) nach einem der Ansprüche 1 bis 4, bei der der obere Rand (10) der Schachtwände (3) Luftspalt (15) bildende Mittel aufweist, die zinnenartig ausgebildet sind, seitliche Öffnungen oder zumindest Abstandshalter (11) aufweisen, die einen Speisenausgabebehälter (26) derart abstützen, dass ein oder mehrere Luftspalte (15) in den durch Abstandshalter (11) verlängerten Schachtwänden (3) verbleiben, wenn ein Speisenausgabebehälter (26) in den Schacht (2) eingesetzt ist.

6. Warmhaltebox (1) nach Anspruch 5, bei der die Abstandshalter (11) mit den Luftspalt (15) bildenden Mitteln abnehmbar sind, bevorzugt händisch.

7. Warmhaltebox (1) nach einem der Ansprüche 1 bis 6, bei der das Heizelement (5) eine Widerstandsheizung, eine Induktionsheizeinrichtung, ein Strahlungsheizelement oder ein Brennstoffelement aufweist.

8. Warmhaltebox (1) nach einem der Ansprüche 1 bis 7, bei der der Schachtboden (4) durch eine Glaskeramikplatte (19) gebildet ist.

9. Warmhaltebox (1) nach einem der Ansprüche 1 bis 8, bei der die Schachtwände (3) als auch die Klappe (8) zumindest oberhalb des Schachtbodens (4) wärmeisoliert sind.

10. Warmhaltebox (1) nach einem der Ansprüche 1 bis 9, bei der durch senkrecht einsetzbare Trennwände das Schachtvolumen unterteilt werden kann und der Schachtboden (4) durch mehrere Heizelemente (5) beheizt werden kann, sodass jedes Teilvolumen separat temperiert werden kann.

11. Warmhaltebox (1) nach einem der Ansprüche 1 bis 10, bei der die Temperatur im Schacht (2) mittels einer Bedieneinrichtung (17) in der Klappe (8) oder in der Montageblende (16) zum Steuern einer elektrischen Steuervorrichtung (18) einstellbar ist, beispielsweise mittels eines Drehreglers oder Druckknöpfen oder mittels eines Touchpads zum Anheben oder Absenken der Temperatur.

12. Warmhaltebox (1) nach einem der Ansprüche 1 bis 11, mit einer Kommunikationsschnittstelle, die eine Fernkommunikation, z. B. mit dem Internet, bereitstellt, über die Steuersignale zum Einstellen der elektrischen Steuervorrichtung (18) übertragen werden können.

13. Theke mit einer oder mehreren Warmhalteboxen (1) nach einem der Ansprüche 1 bis 12.
